(19) Europäisches Patentamt
European Patent Office
Office européen des brevets

(11) EP 1 247 153 B1

(12) EUROPEAN PATENT SPECIFICATION

(45) Date of publication and mention of the grant of the patent:
**21.09.2005 Bulletin 2005/38**

(21) Application number: **01900722.8**

(22) Date of filing: **12.01.2001**

(51) Int Cl.$^7$: **G06F 3/00**

(86) International application number:
**PCT/JP2001/000150**

(87) International publication number:
**WO 2001/052030 (19.07.2001 Gazette 2001/29)**

(54) **COMPUTER WITH PRESSURE-SENSITIVE MEANS, METHOD OF COMPUTER HAVING A PRESSURE-SENSITIVE MEANS AND VIBRATION MEANS, METHOD OF USING THE SAME AND RECORDING MEDIUM FOR THE METHOD**

REHNER MIT DRUCKEMPFINDLICHEN MITTELN, VERFAHREN EINES MIT DRUCKEMPFINDLICHEN MITTELN UND VIBRATIONSERZEUGENDEN MITTELN VORGESEHENEN RECHNERS, IHR VERWENDUNGSVERFAHREN UND AUFZEICHNUNGSMEDIUM FÜR DAS VERFAHREN

ORDINATEUR A UNITE SENSIBLE A LA PRESSION, PROCEDE RELATIF A UN ORDINATEUR A UNITE SENSIBLE A LA PRESSION ET A UNITE DE VIBRATION, PROCEDE POUR L'UTILISATION DE CE TYPE D'ORDINATEUR ET SUPPORT D'INFORMATIONS ASSOCIE AU PROCEDE

(84) Designated Contracting States:
**DE GB**

(30) Priority: **14.01.2000 JP 2000040269**

(43) Date of publication of application:
**09.10.2002 Bulletin 2002/41**

(73) Proprietor: **Sony Computer Entertainment Inc.**
**Tokyo 107-0052 (JP)**

(72) Inventor: **KOMATA, Nobuhiro,**
**Sony Computer Entertainment Inc.**
**Tokyo 107-0052 (JP)**

(74) Representative: **Hedley, Nicholas James Matthew**
**Kilburn & Strode**
**20 Red Lion Street**
**London WC1R 4PJ (GB)**

(56) References cited:
**JP-A- 10 258 181**
**US-A- 5 619 180**
**US-A- 5 808 540**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a computer system having a pressure-sensitive means and vibrating means, a method of using same and computer software for implementing this method.

### BACKGROUND OF THE INVENTION

A known example of a computer under consideration is the entertainment system, such as a game machine which is a typical example. Controllers that have vibration motors have been proposed as the controllers currently used for video game machines. Such controllers equipped with vibration motors, have various vibration motors built into handles held by the user in the left and right hands.

Such a controller is used for the feedback of various events during the game in the form of rotation of the vibration motors. Thereby, the user can feel a heightened sense of reality with these vibrations.

For example, a pressure-sensitive type controller was disclosed in the publication of examined Japanese utility model application No. JP-B-H1-40545, wherein pressure-sensitive output is provided as an input to a VCO (variable control oscillator) and the output of the VCO is used for repeated fire in a game.

US-5808540 describes a biofeedback device that causes vibrations in accordance with the pressure applied to a lever.

US-5619180 describes a method of controlling a remote effect, e.g. the application of a forcer, in which feedback in the form of vibration is provided to the operator, the amplitude of the vibrations being based on the remote force applied.

US-6225975 (JP-A-10 258181) discloses a controller for a gaming machine; the controller has a vibrator that is capable of vibrating and thereby causing the controller to vibrate.

### SUMMARY OF THE INVENTION

It is an object of the present invention to provide a controller which would be able itself to control vibrations of other controllers used in the video game machines.

This and other objects of the present invention are attained by the computer-readable program, the method of controlling a computer system, a computer system and a computer program product as set out in the accompanying independent claims 1, 3, 6 and 9, respectively.

### BRIEF DESCRIPTION OF THE DRAWING

FIG. 1 is a schematic diagram of an example of connecting an entertainment system to a TV monitor to enable a user to enjoy game software or videos;

Fig. 2 is a diagram showing a pressure-sensed value—drive signal conversion table for selecting various drive signals corresponding to various pressure-sensed values;

Fig. 3 is a flowchart of a novel game process including a program for generating vibration depending on the pressure-sensed values;

Fig. 4 is a diagram showing a controller connected to the entertainment system;

Fig. 5 is a block diagram showing the entire entertainment system;

Fig. 6 is a top view of the controller.

Fig. 7 is an exploded perspective view of an embodiment of a second control part of the controller;

Fig. 8A-8C are cross-sections through the second control part of Fig.7 showing an example of the constitution of the second control part.

Fig. 9 shows an equivalent circuit for a pressure-sensitive device consisting of a resistor and conducting member;

Fig. 10 is a block diagram showing the main parts of the controller;

Fig. 11 is an exploded perspective view of a first control part of the controller;

Fig. 12 is a sectional view through the first control part of the controller of Fig. 11;

Fig. 13 diagrammatically shows the circuit configuration of a resistor;

Fig. 14 is a graph showing the characteristic of the analog signal (voltage) output from the output terminal of the resistor of Fig. 13;

Fig. 15 is a diagram showing the constitution wherein the analog signal (voltage) output from the resistor is provided as input to an A/D converter;

Fig. 16 is an exploded perspective view of an embodiment of a third control part of the controller;

Fig. 17 is a diagram showing the situation when the vibration generation system is disposed on the base sides of the first and second handle parts of the controller;

Fig. 18 is an exploded perspective view of the vibration generation system;

Fig. 19 is a perspective view of the vibration generation mechanism, consisting of a motor with an eccentric member attached to a driveshaft;

Fig. 20 is a perspective view of the controllers showing that vibrations of the motor are transmitted via the side walls to the handle parts, and thus vibrations are transmitted to the user's fingers.

## DETAILED DESCRIPTION OF THE PREFERRED EMBODIMENTS

In the preferred embodiment, when a controller having a pressure-sensitive device is operated, vibration depending on the pressure-sense value output at that time is output from a different controller. Thereby, it is possible to provide a chance to create games with an even broader range of ideas than the games that use the repetition of ON operations of an ON/OFF switch or the continuous operation thereof.

Fig. 1 is a schematic diagram showing an example of connecting an entertainment system 500 to a TV monitor 408 to enable a user to enjoy game software. More specific examples of the entertainment system are shown in Fig. 4.

As shown in Fig. 1, a controller 200 which has buttons connected to pressure-sensitive devices and a vibration generator consisting of a motor and a rotating member which is attached to the shaft of the motor such that it is asymmetric to the center of the shaft is connected to the entertainment system 500 used for playing games or enjoying DVD video or other types of video images, and the video output terminals are connected to the television monitor 408.

Here, the analog output from the pressure-sensitive devices is converted by an A/D converter to digital values in the range 0-255 and provided to the entertainment system 500. In addition, based on a drive signal from the entertainment system 500, the aforementioned motor is driven and the aforementioned rotating member rotates, so that the vibration due to this rotation is transmitted to the player through the case of the controller. It is to be noted that the controller 200 equipped with a pressure-sensitive switch and the vibration generator will be described in detail below.

Here follows the description of the case of generating vibration by operation of the controller 200, with reference to Figs. 2 and 3.

As an example, a head-to-head timing game which uses vibration generation will be now described. The game is played as follows. With two controllers 200 connected to the entertainment system 500, when one of the two players pushes a pressure-serisitive switch, vibration is generated on the other controller 200. If desired, when one of the two players pushes a pressure-sensitive switch, vibration may be generated on both controllers 200 (one's own and the other player's).

In this state, when one player pushes the pressure-sensitive switch of his/her controller 200, vibration is generated on the other player's controller 200. At this time, when vibration is generated on the controller 200 of the other player, the other player reacts and pushes the pressure-sensitive switch. The player is given points depending on the response speed at this time.

Fig. 2 shows a pressure-sensed value-drive signal conversion table for selecting a drive signal corresponding to each of the pressure-sensed values "0"-"255". Using this table, each pressure-sensed value is converted to a drive signal. The drive signals P1-P255 corresponding to each of the pressure-sense values are supplied from the entertainment system 500 to the controller 200, and after conversion to analog signals by the A/D converter of the controller 200, they are given as drive signals for the motor of the vibration generator. It is to be noted that this conversion table is an example, and other tables may also be used.

The present invention can offer the following alternative example. In the working example, the pressure-sense value as pushed by the user is used as is. However, in order to compensate for differences in body strength among users and how good their reflexes are, the maximum value of the user pressure-sensed value can be corrected to a maximum game pressure-sense value set in the program, and the intermediate values can be corrected proportionally. This type of correction is performed by preparing a correction table.

In addition, the user pressure-sensed value can be corrected based upon a known function and used as the game pressure-sensed value. This type of correction is performed by creating a correction table that is stored in an appropriate storage unit prepared in advance.

Moreover, the maximum value of the user pressure-sensed value rate of change may be corrected to the maximum game pressure-sensed value rate of change set in the program, and intermediate values can be proportionally corrected and used. This type of correction is performed by creating a correction table. For more details about this method, reference is made to the present inventors' Japanese patent application No. 2000-40257 and the corresponding PCT application PCT/JP01/00136 (WO01/52037).

Next, with reference to FIG. 3, a novel game including a program for generating vibration depending on the pressure-sensed values will be described. The flowchart shown in FIG. 3 shows the process of a game including a program for generating vibration depending on pressure-sensed values.

The program for generating vibration depending on pressure-sensed values may be supplied either recorded alone on an optical disc or other recording medium, or recorded on the recording medium together with the game software as part of the game software. The program for generating vibration depending on pressure-sensed values is run by the entertainment system 500 and executed by its CPU.

In FIG. 3, as shown in Step S1, a decision is made as to whether or not an input of pressure-sensed data is present, and if "YES" is the response then the control process moves to Step S2, where a pressure-sensed value is acquired from controller 200.

The control process then moves to Step S3, where a decision is made as to whether or not the pressure-sensed value data of player A is nonzero, and if "YES" then the control procedure moves to Step S4, or if "NO" then the control procedure moves to Step S5.

In Step S4, a drive signal corresponding to the pressure-sensed value from the controller 200 of player A is read from the table shown in Fig. 2 and supplied to the controller 200 of player B. This drive signal is supplied to the motor of the vibration generator via the A/D converter of controller 200 of player B. Thereby, vibration is generated by the vibration generator of the controller 200 of player B, and this is transmitted to player B via the controller 200 of player B.

In Step S5, a decision is made as to whether the pressure-sense value data of player B is nonzero or not, and if "YES" then control moves to Step S6, or if "NO" then control procedure moves to Step S7.

In Step S6, a drive signal corresponding to the pressure-sense value from the controller 200 of player B is read from the table of Fig. 2 and supplied to the controller 200 of player A. This drive signal is supplied to the motor of the vibration generator via the A/D converter of the controller 200 of player A. Thereby, vibration is generated by the vibration generator of the controller 200 of player A, and this is transmitted to player A via the controller 200 of player A.

In Step S7, a decision is made as to whether or not to end the control, and if "YES" then the control procedure moves to Step S8, and if "NO" then control procedure moves back to Step S 1.

In Step S8, a decision is made as to whether or not input of pressure-sensed data is present, and if "YES" then the control procedure moves to Step S9, and if "NO" then the control procedure moves to Step S12. Here, the decision of whether or not input of pressure-sensed data is present refers to the input from the player where a decision of "none" is made in Step S3 or Step S5. For example, if a decision is made in Step S3 or Step S5 that the input from player A is present, then player A is determined to be the side generating vibration, namely the attacking side, so in Step S8, a decision is made as to whether or not the input is present from player B, which is the side for which a decision will be made about the timing of pushing the button depending on the vibration generated, so that if "YES" then the control procedure moves to Step S9 and if "NO" then control moves to Step S12. It is noted that the decision of whether or not the input is present may be taken over a stipulated length of time, for example, 3 seconds or the like.

In Step S9, a stipulated value x is subtracted from the maximum value. The processing of this Step S9 has the meaning that the defending side, namely the player on the side reacting to the vibration generated by the other player, receives the maximum points decreased by the stipulated value x a number of times which is greater the slower the player's reactions are, thus decreasing the number of points earned.

In Step S10, a decision as to whether or not to end the processing is made, and if "YES" then the control processing moves to Step S11, and if "NO" then the control process goes back to Step S1. This decision can be based on whether one of the players A or B has reached a stipulated point score or whether one of the players has pushed a stipulated button, directing the game to end, or the like.

In Step S11, a screen indicating which player is the winner is displayed on the television monitor 408.

In Step S12, a stipulated value x is subtracted from the maximum value. This is intended to convert into points the response time from when the attacking player (A or B) sends vibration to the other player until the defending player (B or A) to which the vibration is sent pushes the button in response. When the response is slow, the Steps S8 and S12 will loop several times, so that x is repetitively subtracted from the maximum number of points, and the number of points earned is low.

As described above, in the present invention, a novel idea is that vibration depending on the pressure-sensed value is provided as an output from the other player's controller, and thus the scope of game creation can be broadened.

For example, in the afore-described example, while this example relates to a game that uses the screen to certain extent, by allocating various vibration patterns to the increase or decrease of pressure-sensed values or to the pressure-sensed values themselves, it is possible to transmit one's wishes to the other party through a combination of vibrations, so it is possible to develop new software that can be used by seeing- or hearing-impaired persons, for example.

Here follows an explanation of an embodiment of the present invention applied to the controller unit of a video game machine which is one example of a computer.

Fig. 4 is a diagram showing the controller 200 connected to entertainment system 500. The controller 200 is removably connected to the entertainment system 500, and the entertainment system 500 is connected to television monitor 408.

The entertainment system 500 reads the program for a computer game from recording media upon which that program is recorded, and by executing the program displays characters on the television monitor 408. The entertainment system 500 has also various built-in functions for DVD (Digital Versatile Disc) playback, CDDA (compact disc digital audio) playback and the like. The signals from the controller 200 are also processed as one of the aforementioned control functions within the entertainment system 500, and the content thereof may be reflected in the movement of characters and the like on the television monitor 408.

While this depends also on the content of the computer game program, controller 200 may be allocated functions for moving the characters displayed on the television monitor 408 in the directions up, down, left or right.

With reference to Fig. 5, here follows a description of the interior of the entertainment system 500 shown in Fig. 4. Fig. 5 is a block diagram of the entertainment system 500.

A CPU 401 is connected to RAM 402 and a bus 403, respectively. Connected to bus 403 are a graphics processor unit (GPU) 404 and an input/output processor (I/O) 409, respectively.

The GPU 404 is connected via an encoder 407 for converting a digital RGB signal or the like into the NTSC standard television format, for example, to a television monitor (TV) 408 as a peripheral. Connected to the I/O 409 are a driver (DRV) 410 used for the playback and decoding of data recorded upon an optical disc 411, a sound processor (SP) 412, an external memory 415 consisting of flash memory, controller 200 and a ROM 416 which records the operating system and the like. The SP 412 is connected via an amplifier 413 to a speaker 414 as a peripheral.

Here, the external memory 415 may be a card-type memory consisting of a CPU or a gate array and flash memory, which is removably connected via a connector 511 to the entertainment system 500 shown in Fig. 4.

The controller 200 is configured such that, when a plurality of buttons provided thereupon are pushed, it gives instructions to the entertainment system 500. In addition, the driver 410 is provided with a decoder for decoding images encoded based upon the MPEG standard.

The description will be made now as to how the images will be displayed on the television monitor 408 based on the operation of controller 200. It is assumed that data for objects consisting of polygon vertex data, texture data and the like recorded on the optical disc 411 is read by the driver 410 and stored in the RAM 402 of the CPU 401.

When instructions from the player via controller 200 are provided as an input to the entertainment system 500, the CPU 401 calculates the three-dimensional position and orientation of objects with respect to the point of view based on these instructions. Thereby, the polygon vertex data for objects defined by X, Y, Z coordinate values are modified variously. The modified polygon vertex data is subjected to perspective conversion processing and converted into two-dimensional coordinate data.

The regions specified by two-dimensional coordinates are so-called polygons. The converted coordinate data, Z data and texture data are supplied to the GPU 404. Based on this converted coordinate data, Z data and texture data, the GPU 404 performs the drawing process by writing texture data sequentially into the RAM 405. One frame of image data upon which the drawing process is completed is encoded by the encoder 407 and then supplied to the television monitor 408 and displayed on its screen as an image.

Fig. 6 is a top view of controller 200. The controller 200 consists of a unit body 201 on the top surface of which are provided first and second control parts 210 and 220, and on the side surface of which are provided third and fourth control parts 230 and 240 of the controller 200.

The first control part 210 of the controller is provided with a cruciform control unit 211 used for pushing control, and the individual control keys 211 a extending in each of the four directions of the control unit 211 form a control element. The first control part 210 is the control part for providing movement to the characters displayed on the screen of the television receiver, and has the functions for moving the characters in the up, down, left and right directions by pressing the individual control keys 211 a of the cruciform control unit 211.

The second control part 220 is provided with four cylindrical control buttons 221 (control elements) for pushing control. The individual control buttons 221 have identifying marks such as "○" (circle), "×" (cross), "Δ" (triangle) and "□" (quadrangle) on their tops, in order to easily identify the individual control buttons 221. The functions of the second control part 220 are set by the game program recorded upon the optical disc 411, and the individual control buttons 221 may be allocated functions that change the state of the game characters, for example.

For example, the control buttons 221 may be allocated functions for moving the left arm, right arm, left leg and right leg of the character.

The third and fourth control parts 230 and 240 of the controller have nearly the same structure, and both are provided with two control buttons 231 and 241 (control elements) for pushing control, arranged above and below. The functions of these third and fourth control parts 230 and 240 are also set by the game program recorded upon the optical disc, and may be allocated functions for making the game characters do special actions, for example.

Moreover, two joy sticks 251 for performing analog operation are provided upon the unit body 201 shown in Fig. 6. The joy sticks 251 can be switched and used instead of the first and second control parts 210 and 220 described above. This switching is performed by means of an analog selection switch 252 provided upon the unit body 201. When the joy sticks 251 are selected, a display lamp 253 provided on the unit body 201 lights, indicating the state wherein the joy sticks 251 are selected.

It is to be noted that on unit body 201 there are also provided a start switch 254 for starting the game and a select switch 255 for selecting the degree of difficulty or the like at the start of a game, and the like.

In Fig. 6, as indicated by broken lines, the controller 200 is held by the left hand L and the right hand R and is operated by the other fingers, and in particular the thumbs L1 and R1 are able to operate most of the buttons on the top surface.

Fig. 7 and Figs. 8A-8C are, respectively, an exploded perspective view and cross-sectional views showing the second control part of the controller.

As shown in Fig. 7, the second control part 220 consists of four control buttons 221 which serve as the control elements, an elastic body 222, and a sheet member 223 provided with resistors 40. The individual control buttons 221 are inserted from behind through insertion holes 201 a formed on the upper surface of the unit body 201. The control buttons 221 inserted into the insertion holes 201a are able to move freely in the axial direction.

The elastic body 222 is made of insulating rubber or the like and has elastic areas 222a which protrude upward, and the lower ends of the control buttons 221 are supported upon the upper walls of the elastic areas 222a. When the control buttons 221 are pressed, the inclined-surface portions of these elastic areas 222a flex so that the upper walls move together with the control buttons 221.

On the other hand, when the pushing pressure on the control buttons 221 is released, the flexed inclined-surface portions of these elastic areas 222a elastically return to their original shape, pushing up the control buttons 221. The elastic body 222 functions as a spring means whereby control buttons 221 which had been pushed in by a pushing action are returned to their original positions. As shown in Figs. 8A-8C, conducting members 50 are attached to the rear surface of the elastic body 222.

The sheet member 223 consists of a membrane or other thin sheet material which has flexibility and insulating properties. Resistors 40 are provided in appropriate locations on this sheet member 223 and these resistors 40 and conducting member 50 are each disposed such that they face one of the control buttons 221 via the elastic body 222. The resistors 40 and conducting members 50 form pressure-sensitive devices. These pressure-sensitive devices consisting of resistors 40 and conducting members 50 have resistance values that vary depending on the pushing pressure received from the control buttons 221.

To describe this in more detail, as shown in Fig. 8A-8C, the second control part 220 is provided with control buttons 221 as control elements, an elastic body 222, conducting members 50 and resistors 40. Each conducting member 50 may be made of conductive rubber which has elasticity, for example, and has a conical shape with its center as a vertex. The conducting members 50 are adhered to the inside of the top surface of the elastic areas 222a formed in the elastic body 222.

In addition, the resistors 40 may be provided on an internal board 204, for example, opposite the conducting members 50, so that the conducting members 50 come into contact with resistors 40 together with the pushing action of the control buttons 221.

The conducting member 50 deforms depending on the pushing force on the control button 221 (namely the contact pressure with the resistor 40), so as shown in Figs. 8B and 8C, the surface area in contact with the resistor 40 varies depending on the pressure. To wit, when the pressing force on the control button 221 is weak, as shown in Fig. 8B, only the area near the conical tip of the conducting member 50 is in contact. As the pressing force on the control button 221 becomes stronger, the tip of the conducting member 50 deforms gradually so the surface area in contact expands.

Fig. 9 is a diagram showing an equivalent circuit for a pressure-sensitive device consisting of a resistor 40 and conducting member 50. As shown in this diagram, the pressure-sensitive device is inserted in series in a power supply line 13, where the voltage $V_{CC}$ is applied between the electrodes 40a and 40b. As shown in this diagram, the pressure-sensitive device is divided into a variable resistor 42 that has the relatively small resistance value of the conducting member 50, and a fixed resistor 41 that has the relatively large resistance value of the resistor 40. Among these, the portion of the variable resistor 42 is equivalent to the portion of resistance in the contact between the resistor 40 and the conducting member 50, so the resistance value of the pressure-sensitive device varies depending on the surface area of contact with the conducting member 50.

To wit, when the conducting member 50 comes into contact with the resistor 40, in the portion of contact, the conducting member 50 becomes a bridge instead of the resistor 40 and a current flows, so the resistance value becomes smaller in the portion of contact. Therefore, the greater the surface area of contact between the resistor 40 and conducting member 50, the lower the resistance value of the pressure-sensitive device becomes. In this manner, the entire pressure-sensitive device can be understood to be a variable resistor. Note that Figs. 8A-8C show only the contact portion between the conducting member 50 and resistor 40 which forms the variable resistor 42 of Fig. 9, but the fixed resistor of Fig. 11 is omitted from Fig. 10.

In the preferred embodiment, an output terminal is provided near the boundary between the variable resistor 42 and fixed resistor 41, namely near the intermediate point of the resistors 40, and thus a voltage stepped down from the applied voltage $V_{CC}$ by the amount the variable resistance is extracted as an analog signal corresponding to the pushing pressure by the user on the control button 221.

First, since a voltage is applied to the resistor 40 when the power is turned on, even if the control button 221 is not pressed, a fixed analog signal (voltage) $V_{min}$ is provided as the output from the output terminal 40c. Next, even if the control button 221 is pressed, the resistance value of this resistor 40 does not change until the conducting member 50 contacts the resistor 40, so the output from the resistor 40 remains unchanged at $V_{min}$.

If the control button 221 is pushed further and the conducting member 50 comes into contact with the resistor 40, the surface area of contact between the conducting member 50 and the resistor 40 increases in response to the pushing pressure on the control button 221, and thus the resistance of the resistor 40 is reduced so the analog signal (voltage) output from the output terminal 40c of the resistor 40 increases.

Furthermore, the analog signal (voltage) output from the output terminal 40c of the resistor 40 reaches the maximum $V_{max}$ when the conducting member 50 is most deformed.

Fig. 10 is a block diagram showing the main parts of the controller 200. An MPU 14 mounted on the internal board of the controller 200 is provided with a switch 18, an A/D converter 18 and two vibration generation systems. The analog signal (voltage) output from the output terminal 40c of the resistor 40 is provided as input to the A/D converter 16 and is converted to a digital signal.

The digital signal output from the A/D converter 16 is sent via an interface 17 provided upon the internal board of the controller 200 to the entertainment system 500 and the actions of game characters and the like are executed based on this digital signal.

Changes in the level of the analog signal output from the output terminal 40c of the resistor 40 correspond to changes in the pushing pressure received from the control button 221 (control element) as described above. Therefore, the digital signal outputted from the A/D converter 16 corresponds to the pushing pressure on the control button 221 (control element) from the user. If the actions of the game characters and the like are controlled based on the digital signal that has such a relationship with the pushing pressure from the user, it is possible to achieve smoother and more analog-like action than with control based on a binary digital signal based only on zeroes and ones.

The configuration is such that the switch 18 is controlled by a control signal sent from the entertainment system 500 based on a game program recorded on an optical disc 411. When a game program recorded on optical disc is executed by the entertainment system 500, depending on the content of the game program, a control signal is provided as output to specify whether the A/D converter 16 is to function as a means of providing output of a multi-valued analog signal, or as a means of providing a binary digital signal. Based on this control signal, the switch 18 is switched to select the function of the A/D converter 16.

Each of the two vibration generation systems consists of a driver 19 which has a D/A converter that takes drive signals supplied from the entertainment system 500 via an interface 17, converts them to analog signals and amplifies them, a motor 20 driven by the output thereof, and an eccentric member 21 attached to the drive shaft of the motor 20. The eccentric member 21 is of a different size. This is intended to generate vibrations by its rotation. The vibration generation systems are to be described in detail later.

Figs. 11 and 12 that show an example of the configuration of the first control part of the controller.

As shown in Fig. 11, the first control part 210 includes a cruciform control unit 211, a spacer 212 that positions this control unit 211, and an elastic body 213 that elastically supports the control unit 211. Moreover, as shown in Fig. 12, a conducting member 50 is attached to the rear surface of the elastic body 213, and the configuration is such that resistors 40 are disposed at the positions facing the individual control keys 211a (control elements) of the control unit 211 via the elastic body 213.

The overall structure of the first control part 210 has already been made public knowledge in the publication of unexamined Japanese patent application No. JP-A-H8-163672. The control unit 211 uses a hemispherical projection 212a formed in the center of the spacer 212 as a fulcrum, and the individual control keys 211a (control elements) are assembled such that they can push on the resistor 40 side (see Fig. 12).

Conducting members 50 are adhered to the inside of the top surface of the elastic body 213 in positions corresponding to the individual control keys 211 a (control elements) of the cruciform control unit 211. In addition, the resistors 40 with a single structure are disposed such that they face the individual conducting members 50.

When the individual control keys 211a which are control elements are pushed, the pushing pressure acts via the elastic body 213 on the pressure-sensitive devices consisting of a conducting member 50 and resistor 40, so that its electrical resistance value varies depending on the magnitude of the pushing pressure.

Fig. 13 is a diagram showing the circuit configuration of the resistor. As shown in this diagram, the resistor 40 is inserted in series in a power supply line 13, where a voltage is applied between the electrodes 40a and 40b. The resistance of this resistor 40 is illustrated schematically, as shown in this diagram, the resistor 40 is divided into first and second variable resistors 43 and 44.

Among these, the portion of the first variable resistor 43 is in contact, respectively, with the conducting member 50 that moves together with the control key (up directional key) 211a for moving the character in the up direction, and with the conducting member 50 that moves together with the control key (left directional key) 211a for moving the character in the left direction, so its resistance value varies depending on the surface area in contact with these conducting members 50.

In addition, the portion of the second variable resistor 44 is in contact, respectively, with the conducting member 50 that moves together with the control key (down directional key) 211a for moving the character in the down direction, and with the conducting member 50 that moves together with the control key (right directional key) 211a for moving the character in the right direction, so its resistance value varies depending on the surface area in contact with these conducting members 50.

Moreover, an output terminal 40c is provided intermediate between the variable resistors 43 and 44, and an analog signal corresponding to the pushing pressure on the individual control keys 211a (control elements) is provided as output from this output terminal 40c.

The output from the output terminal 40c can be calculated from the ratio of the split in resistance value of the first and second variable resistors 43 and 44. For example, if R1 is the resistance value of the first variable resistor 43, R2 is the resistance value of the second variable resistor 44 and $V_{CC}$ is the power supply voltage, then the output voltage V appearing at the output terminal 40c can be expressed by the following equation.

$$V=V_{CC}\times R2/(R1 + R2)$$

Therefore, when the resistance value of the first variable resistor 43 decreases, the output voltage increases, but when the resistance value of the second variable resistor 44 decreases, the output voltage also decreases.

Fig. 14 is a graph showing the characteristic of the analog signal (voltage) output from the output terminal of the resistor.

First, since a voltage is applied to the resistor 40 when the power is turned on, even if the individual control keys 211a of the control unit 211 are not pressed, a fixed analog signal (voltage) $V_0$ is provided as output from the output terminal 40c (at position 0 in the graph).

Next, even if one of the individual control keys 221a is pressed, the resistance value of this resistor 40 does not change until the conducting member 50 contacts the resistor 40, and the output from the resistor 40 remains unchanged at $V_0$.

Furthermore, if the up directional key or left directional key is pushed until the conducting member 50 comes into contact with the first variable resistor 43 portion of the resistor 40 (at position p in the graph), thereafter the surface area of contact between the conducting member 50 and the first variable resistor 43 portion increases in response to the pushing pressure on the control key 22 1 a (control elements), and thus the resistance of that portion is reduced so the analog signal (voltage) output from the output terminal 40c of the resistor 40 increases.

Furthermore, the analog signal (voltage) output from the output terminal 40c of the resistor 40 reaches the maximum $V_{max}$ when the conducting member 50 is most deformed (at position q in the graph).

On the other hand, if the down directional key or right directional key is pushed until the conducting member 50 comes into contact with the second variable resistor 44 portion of the resistor 40 (at position r in the graph), thereafter the surface area of contact between the conducting member 50 and the second variable resistor 44 portion increases in response to the pushing pressure on the control key 211a (control elements), and thus the resistance of that portion is reduced, and as a result, the analog signal (voltage) output from the output terminal 40c of the resistor 40 decreases.

Furthermore, the analog signal (voltage) output from the output terminal 40c of the resistor 40 reaches the minimum $V_{min}$ when the conducting member 50 is most deformed (at position s in the graph).

As shown in Fig. 15, the analog signal (voltage) output from the output terminal 40c of the resistor 40 is provided as input to an A/D converter 16 and converted to a digital signal. Note that the function of the A/D converter 16 shown in Fig. 15 is as described previously based on Fig. 10, so a detailed description shall be omitted here.

Fig. 16 is an exploded perspective view of the third control part of the controller.

The third control part 230 consists of two control buttons 231, a spacer 232 for positioning these control buttons 231 within the interior of the controller 200, a holder 233 that supports these control buttons 231, an elastic body 234 and an internal board 235, having a structure wherein resistors 40 are attached to appropriate locations upon the internal board 235 and conducting members 50 are attached to the rear surface of the elastic body 234.

The overall structure of the third control part 230 also already has been made public knowledge in the publication of unexamined Japanese patent application No. JP-A-H8-163672, so a detailed description thereof will be omitted. The individual control buttons 231 can be pushed in while being guided by the spacer 232, the pushing pressure when pressed acts via the elastic body 234 on the pressure-sensitive device consisting of a conducting member 50 and resistor 40. The electrical resistance value of the pressure-sensitive device varies depending on the magnitude of the pushing pressure it receives.

It is noted that the fourth control part 240 has the same structure as that of the third control part 230 described above.

As shown in Fig. 17, the vibration generation system mechanism 22 is disposed on the base sides of the first and second handle parts 10 and 11 which are held by the fingers of the user when the controller 200 is held. As shown in Fig. 18, the vibration generation system mechanism 22 consists of a motor 20 driven by drive signals supplied from the entertainment system 500 and an eccentric member 21 attached to the driveshaft 20a of the motor 20.

The eccentric member 21 is a metallic member having a large weight, and consists of a semicircular weight 21a which is eccentric with respect to a mating hole 20b which serves as the center of rotation when mated to the drive shaft 20a. As shown in Fig. 19, the motor 20 with the eccentric member 21 attached to its drive shaft 20a is attached to the inside of the first handle part 10, mated to a motor housing 20c in a mating indentation 23 formed as a rectangular tube on the first handle part.

With a vibration generation system mechanism 22 having such a structure, when the motor 20 is driven the eccentric member 21 rotates and the motor 20 vibrates as shown in Fig. 20, and these vibrations are transmitted to the first handle part 10 through the side walls 23a which form the mating indentation 23, and thus the vibrations are transmitted to the fingers holding the first handle part 10.

Here, the vibration generation system mechanisms 22 and 22 disposed on the first and second handle parts 10 and 11 are constituted such that the states of generation of vibrations thereof are different. For example, the vibration generation system mechanisms 22 and 22 have different sizes of motors 20 and different eccentric members 21, so when driven by a fixed driving voltage, by making the speed of rotation different, the speed of rotation of the eccentric members 21 is made different, and the frequency of vibrations can be made to be different.

Due to the present invention, it is possible to control the vibrations themselves with the controller.

Moreover, due to the present invention, it is possible to provide vibrations that depend on the pressure-sense values as output from the other player's controller, so the scope of game creation can be made much broader compared to the existing systems.

### Claims

1. A computer-readable and executable program comprising computer code that, when run on a computer that is connected with a first controller (200) and at least one second controller (200), each controller having:

    pressure-sensitive means (211,221) that can provide an output in accordance with the pressure applied to it and
    vibrating means (19-21) that is able to vibrate,

    performs a step in which, the vibrating means (19-21) of said second controller (200) is caused to vibrate depending on the output of the pressure sensitive means (211,221) of said first controller (200) and a step in which the vibrating means (19-21) of said first controller (200) is caused to vibrate depending on the output of the pressure-sensitive means (211,221) of said second controller (200).

2. The program according to claim 1, wherein the frequency of vibration of the vibrating means (19-21) of said second controller (200), is caused to vary depending on the rate of change per time unit of the value of the output of pressure sensitive means (211,221) of said first controller (200).

3. A method of using a computer system having a first controller(200) having pressure-sensitive means (211,221) that can provide an output value in accordance with the pressure applied to it and vibrating means (19-21) that is able to vibrate, **characterised in that** the computer system includes at least one second controller (200), each said at least one second controller having pressure-sensitive means (211,221) that can provide an output value in accordance with the pressure applied to it and vibrating means (19-21) that is able to vibrate, wherein the method comprises:

    causing vibration in the vibrating means (19-21) of the second controller (200) on the basis of an output value from the pressure-sensitive means (211,221) of the first controller (200), and
    causing vibration in the vibrating means (19-21) of said first controller (200) on the basis of the output value from the pressure-sensitive means (211,221) of second controller (200).

4. The method according to claim 3, wherein, in said step of causing vibration in vibrating means (19-21) based on the output value from said pressure-sensitive means (211,221), the magnitude of said vibration is set in dependence on the magnitude of said output value.

5. The method of using a computer according to claim 3, wherein the frequency of said vibration of the vibrating means (19-21) of one of the first and second controller (200) varies depending on the rate of change per time unit of the output value of the pressure sensitive means (211,221) of the other of the first and second controller (200).

6. A computer system having a first controller (200) having a pressure-sensitive (211,221) means that can provide an output in accordance with the pressure applied to it and vibrating means (19-21) that is able to vibrate,
    **characterised in that** the computer system further comprises:

    at least one second controller (200), controller each said at least one second having a pressure-sensitive means (211,221) that can provide an output in accordance with the pressure applied to it and vibrating means (19-21) that is able to vibrate,
    means for, based on an output value from the pressure-sensitive
    means (211,221) of said first controller (200), causing vibration in the vibrating means (19-21) of said second controller (200), and
    means for, based on the output value from the pressure-sensitive means (211,221) of said second controller (200), causing vibration in the vibrating means (19-21) of said first controller (200).

7. The computer system according to claim 6, wherein said means for causing vibration in the vibrating means (19-21) includes means of setting the magnitude of said vibration in dependence on the magnitude of said output value.

8. The computer system according to claim 6 or claim 7 in the form of a video game machine.

9. A computer program product comprising program code means stored on a computer readable medium for performing the steps of any one of claims 3 to 5 when said program product is run on a computer.

**Patentansprüche**

1. Computerlesbares und -ausführbares Programm, das Computercode enthält, der, wenn er auf einem Computer abläuft, der mit einer ersten Steuereinheit (200) und wenigstens einer zweiten Steuereinheit (200) verbunden ist, wovon jede enthält:

   druckempfindliche Mittel (211, 221), die in Übereinstimmung mit dem an sie angelegten Druck ein Ausgangssignal bereitstellen können, und
   Schwingungsmittel (19-21), die schwingen können,

   einen Schritt ausführt, in dem die Schwingungsmittel (19-21) der zweiten Steuereinheit (200) dazu veranlasst werden, in Abhängigkeit vom Ausgangssignal der druckempfindlichen Mittel (211, 221) der ersten Steuereinheit (200) zu schwingen, und einen Schritt ausführt, in dem die Schwingungsmittel (19-21) der ersten Steuereinheit (200) dazu veranlasst werden, in Abhängigkeit von dem Ausgangssignal der druckempfindlichen Mittel (211, 221) der zweiten Steuereinheit (200) zu schwingen.

2. Programm nach Anspruch 1, bei dem eine Änderung der Schwingungsfrequenz der Schwingungsmittel (19-21) der zweiten Steuereinheit (200) in Abhängigkeit von der Änderungsrate pro Einheitszeit des Wertes des Ausgangssignals der druckempfindlichen Mittel (211, 221) der ersten Steuereinheit (200) veranlasst wird.

3. Verfahren zum Verwenden eines Computersystems, das eine erste Steuereinheit (200) mit druckempfindlichen Mitteln (211, 221), die einen Ausgangswert in Übereinstimmung mit dem an sie angelegten Druck bereitstellen können, und Schwingungsmittel (19-21), die schwingen können, besitzt, **dadurch gekennzeichnet, dass** das Computersystem wenigstens eine zweite Steuereinheit (200) enthält, wobei jede der wenigstens einen zweiten Steuereinheit druckempfindliche Mittel (211, 221), die einen Ausgangswert in Übereinstimmung mit dem an sie angelegten Druck bereitstellen können, und Schwingungsmittel (19-21), die schwingen können, besitzt, wobei das Verfahren umfasst:

   Hervorrufen einer Schwingung in den Schwingungsmitteln (19-21) der zweiten Steuereinheit (200) auf der Grundlage eines Ausgangswerts der druckempfindlichen Mittel (211, 221) der ersten Steuereinheit (200); und
   Hervorrufen einer Schwingung in den Schwingungsmitteln (19-21) der ersten Steuereinheit (200) auf der Grundlage des Ausgangswertes der druckempfindlichen Mittel (211, 221) der zweiten Steuereinheit (200).

4. Verfahren nach Anspruch 3, bei dem in dem Schritt, in dem in den Schwingungsmitteln (19-21) auf der Grundlage des Ausgangswertes der druckempfindlichen Mittel (211, 221) eine Schwingung hervorgerufen wird, die Größe der Schwingung in Abhängigkeit von der Größe des Ausgangswertes gesetzt wird.

5. Verfahren zum Verwenden eines Computers nach Anspruch 3, bei dem sich die Frequenz der Schwingung der Schwingungsmittel (19-21) entweder der ersten oder der zweiten Steuereinheit (200) in Abhängigkeit von der Änderungsrate pro Einheitszeit des Ausgangswertes der druckempfindlichen Mittel (211, 221) der jeweils anderen der ersten und der zweiten Steuereinheit (200) ändert.

6. Computersystem, mit einer ersten Steuereinheit (200), die druckempfindliche Mittel (211, 221), die ein Ausgangssignal in Übereinstimmung mit dem an sie angelegten Druck bereitstellen können, und Schwingungsmittel (19-21), die schwingen können, besitzt, **dadurch gekennzeichnet, dass** das Computersystem ferner versehen ist mit:

   wenigstens einer zweiten Steuereinheit (200), wobei jede der wenigstens einen zweiten Steuereinheit druckempfindliche Mittel (211, 221), die ein Ausgangssignal in Übereinstimmung mit dem an sie angelegten Druck bereitstellen können, und Schwingungsmittel (19-21), die schwingen können, besitzt,
   Mitteln, die auf der Grundlage eines Ausgangswertes der druckempfindlichen Mittel (211, 221) der ersten Steuereinheit (200) eine Schwingung in den Schwingungsmitteln (19-21) der zweiten Steuereinheit (200) hervorrufen, und
Mitteln, die auf der Grundlage des Ausgangswertes der druckempfindlichen Mittel (211, 221) der zweiten Steuereinheit (200) eine Schwingung in den Schwingungsmitteln (19-21) der ersten Steuereinheit (200) hervorrufen.

**7.** Computersystem nach Anspruch 6, bei dem die Mittel, die eine Schwingung in den Schwingungsmitteln (19-21) hervorrufen, Mittel enthalten, die die Größe der Schwingung in Abhängigkeit von der Größe des Ausgangswertes setzen.

**8.** Computersystem nach Anspruch 6 oder Anspruch 7 in Form einer Videospielmaschine.

**9.** Computerprogrammprodukt, das Programmcodemittel enthält, die in einem computerlesbaren Medium gespeichert sind, um die Schritte nach einem der Ansprüche 3 bis 5 auszuführen, wenn das Programmprodukt auf einem Computer läuft.

## Revendications

**1.** Programme lisible et exécutable sur ordinateur comprenant un code informatique qui, lorsqu'il est exécuté sur un ordinateur connecté à un premier contrôleur (200) et au moins un second contrôleur (200), chaque contrôleur possédant :

une unité sensible à la pression (211, 221) qui peut délivrer une sortie en fonction de la pression qui lui est appliquée et
une unité de vibration (19 à 21) qui est capable de vibrer,
réalise une étape dans laquelle, l'unité de vibration (19 à 21)

dudit second contrôleur (200) est entraînée à vibrer en fonction de la sortie de l'unité sensible à la pression (211, 221) dudit premier contrôleur (200) et une étape dans laquelle l'unité de vibration (19 à 21) dudit premier contrôleur (200) est entraînée à vibrer en fonction de la sortie de l'unité sensible à la pression (211, 221) dudit second contrôleur (200).

**2.** Programme selon la revendication 1, dans lequel la fréquence de vibration de l'unité de vibration (19 à 21) dudit second contrôleur (200), est entraînée à varier en fonction du taux de changement par unité de temps de la valeur de la sortie de l'unité sensible à la pression (211, 221) dudit premier contrôleur (200).

**3.** Procédé d'utilisation d'un système informatique possédant un premier contrôleur (200) possédant une unité sensible à la pression (211, 221) qui peut délivrer une valeur de sortie en fonction de la pression qui lui est appliquée et une unité de vibration (19 à 21) qui est capable de vibrer, **caractérisé en ce que** le système informatique comprend au moins un second contrôleur (200), chacun dit au moins un second contrôleur possédant une unité sensible à la pression (211, 221) qui peut délivrer une valeur de sortie en fonction de la pression qui lui est appliquée et une unité de vibration (19 à 21) qui est capable de vibrer, dans lequel le procédé comprend :

l'entraînement de la vibration dans l'unité de vibration (19 à 21) du second contrôleur (200) sur la base d'une valeur de sortie depuis l'unité sensible à la pression (211, 221) du premier contrôleur (200), et
l'entraînement de la vibration dans l'unité de vibration (19 à 21) dudit premier contrôleur (200) sur la base de la valeur de sortie depuis l'unité sensible à la pression (211, 221) du second contrôleur (200).

**4.** Procédé selon la revendication 3, dans lequel dans ladite étape d'entraînement de la vibration dans l'unité de vibration (19 à 21) sur la base de la valeur de sortie depuis ladite unité sensible à la pression (211, 221), la magnitude de ladite vibration est définie en fonction de la magnitude de ladite valeur de sortie.

**5.** Procédé d'utilisation d'un ordinateur selon la revendication 3, dans lequel la fréquence de ladite vibration de l'unité de vibration (19 à 21) de l'un des premier et second contrôleurs (200) varie en fonction du taux de changement par unité de temps de la valeur de sortie de l'unité sensible à la pression (211, 221) de l'autre des premier et second contrôleurs (200).

**6.** Système informatique possédant un premier contrôleur (200) possédant une unité sensible à la pression (211, 221) qui peut délivrer une sortie en fonction de la pression qui lui est appliquée et une unité de vibration (19 à 21) qui est capable de vibrer, **caractérisé en ce que** le système informatique comprend en outre :

au moins un second contrôleur (200), chaque dit au moins un second contrôleur possédant une unité sensible à la pression (211, 221) qui peut délivrer une sortie en fonction de la pression qui lui est appliquée et une unité de vibration (19 à 21) qui est capable de vibrer,
une unité destinée à, sur la base d'une valeur de sortie depuis l'unité sensible à la pression (211, 221) dudit premier contrôleur (200), entraîner la vibration dans l'unité de vibration (19 à 21) dudit second contrôleur (200), et
une unité destinée à, sur la base de la valeur de sortie depuis l'unité sensible à la pression (211, 221) dudit second contrôleur (200), entraîner la vibration dans l'unité de vibration (19 à 21) dudit premier contrôleur (200).

**7.** Système informatique selon la revendication 6, dans lequel
ladite unité destinée à entraîner la vibration dans l'unité de vibration (19 à 21) comprend une unité de définition de la magnitude de ladite vibration en fonction de la magnitude de ladite valeur de sortie.

**8.** Système informatique selon la revendication 6 ou 7 sous la forme d'une machine de jeu vidéo.

**9.** Produit de programme informatique comprenant une unité de code de programme stockée sur un support lisible sur ordinateur pour réaliser les étapes de l'une quelconque des revendications 3 à 5 lorsque ledit produit de programme est exécuté sur un ordinateur.

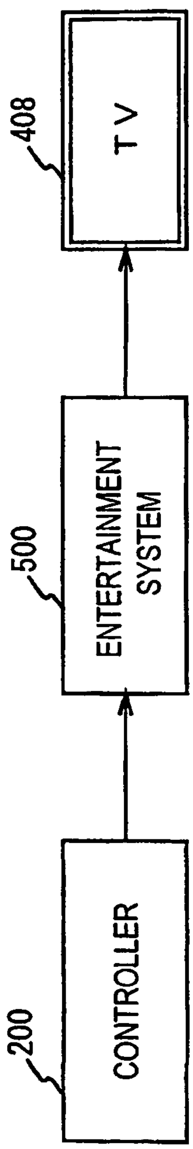


FIG. 1

| PRESSURE-SENSE VALUE | DRIVE SIGNAL |
|---|---|
| 0 | 0 |
| 1 | P 1 |
| ⋮ | ⋮ |
| 2 5 5 | P 2 5 5 |

FIG. 2

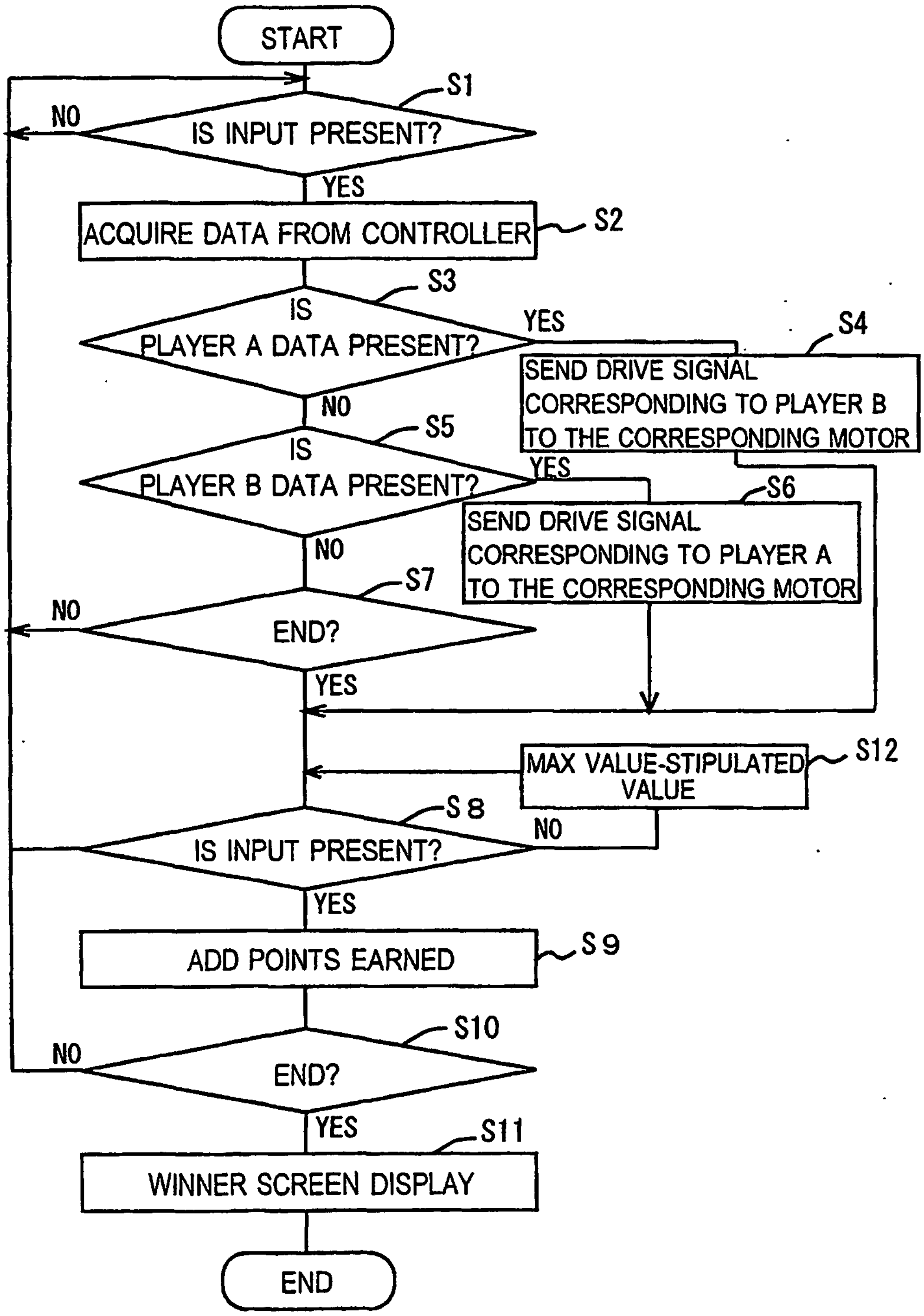
START
S1
NO
IS INPUT PRESENT?
YES
ACQUIRE DATA FROM CONTROLLER
S2
S3
IS
PLAYER A DATA PRESENT?
YES
S4
SEND DRIVE SIGNAL
CORRESPONDING TO PLAYER B
TO THE CORRESPONDING MOTOR
NO
S5
IS
PLAYER B DATA PRESENT?
YES
S6
SEND DRIVE SIGNAL
CORRESPONDING TO PLAYER A
TO THE CORRESPONDING MOTOR
NO
S7
NO
END?
YES
MAX VALUE-STIPULATED VALUE
S12
S8
NO
IS INPUT PRESENT?
YES
ADD POINTS EARNED
S9
S10
NO
END?
YES
S11
WINNER SCREEN DISPLAY
END

FIG. 3

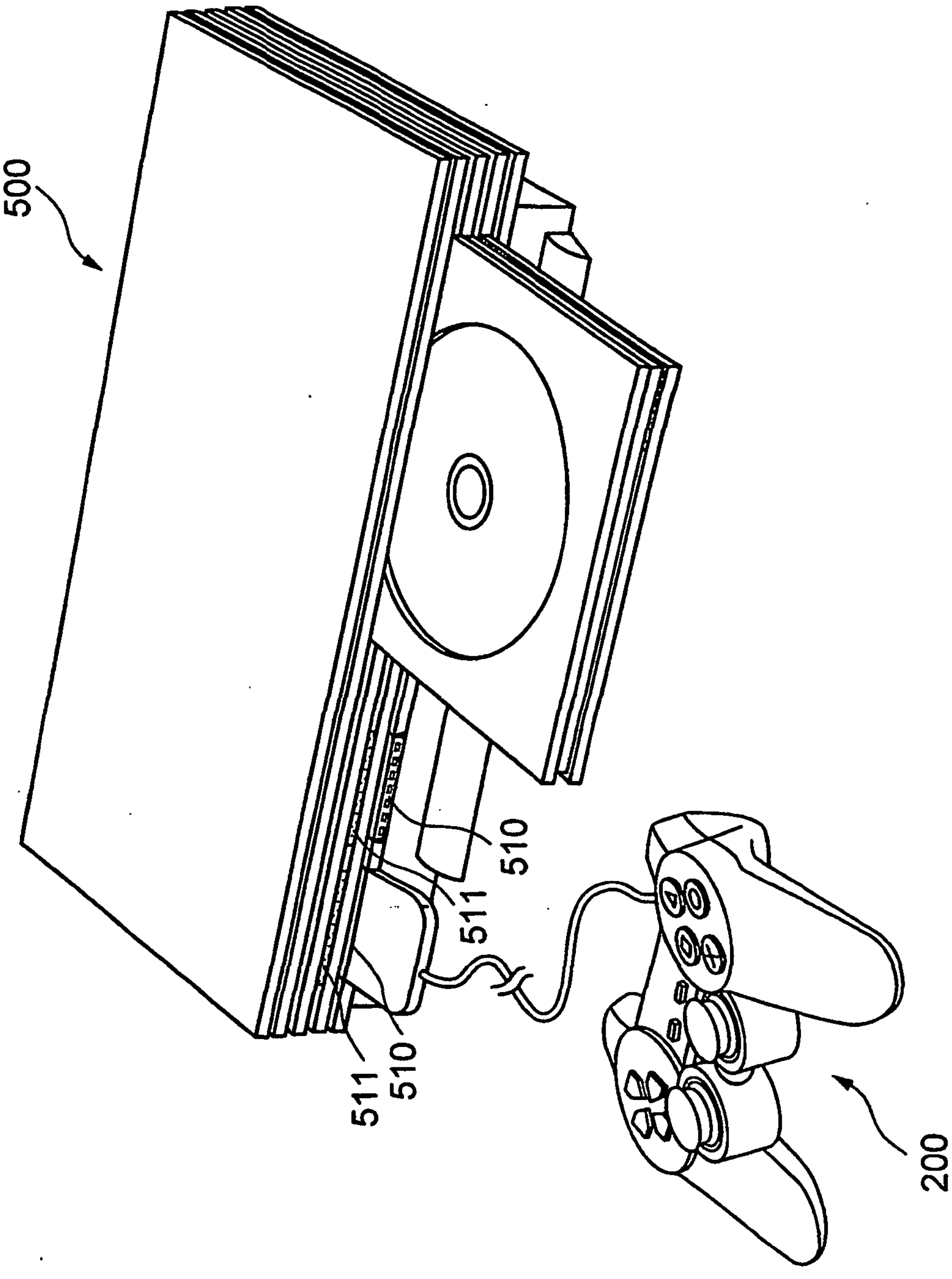


FIG. 4

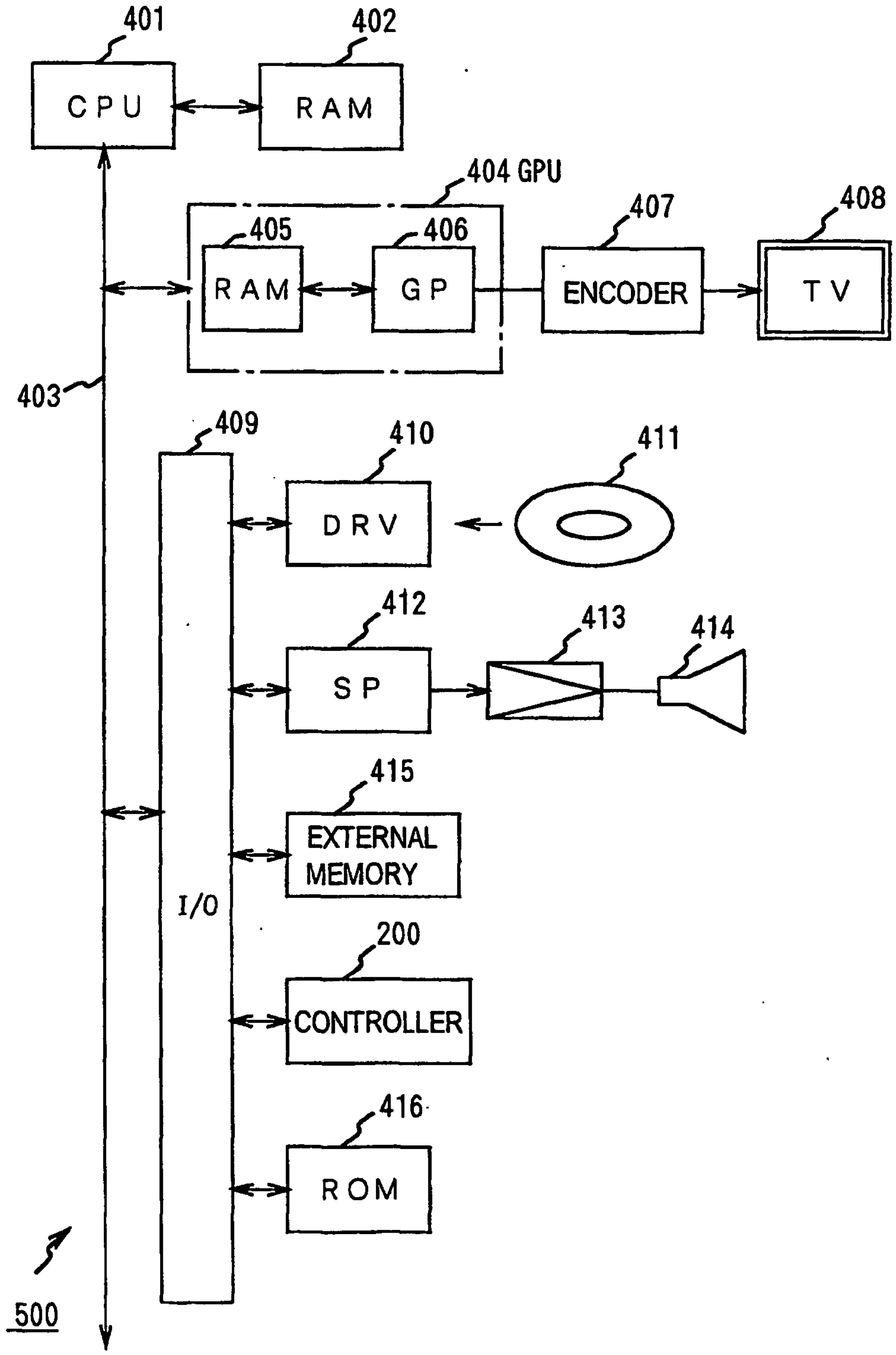
401
CPU
402
RAM
404 GPU
405
RAM
406
GP
407
ENCODER
408
TV
403
409
I/O
410
DRV
411
412
SP
413
414
415
EXTERNAL MEMORY
200
CONTROLLER
416
ROM
500

FIG. 5

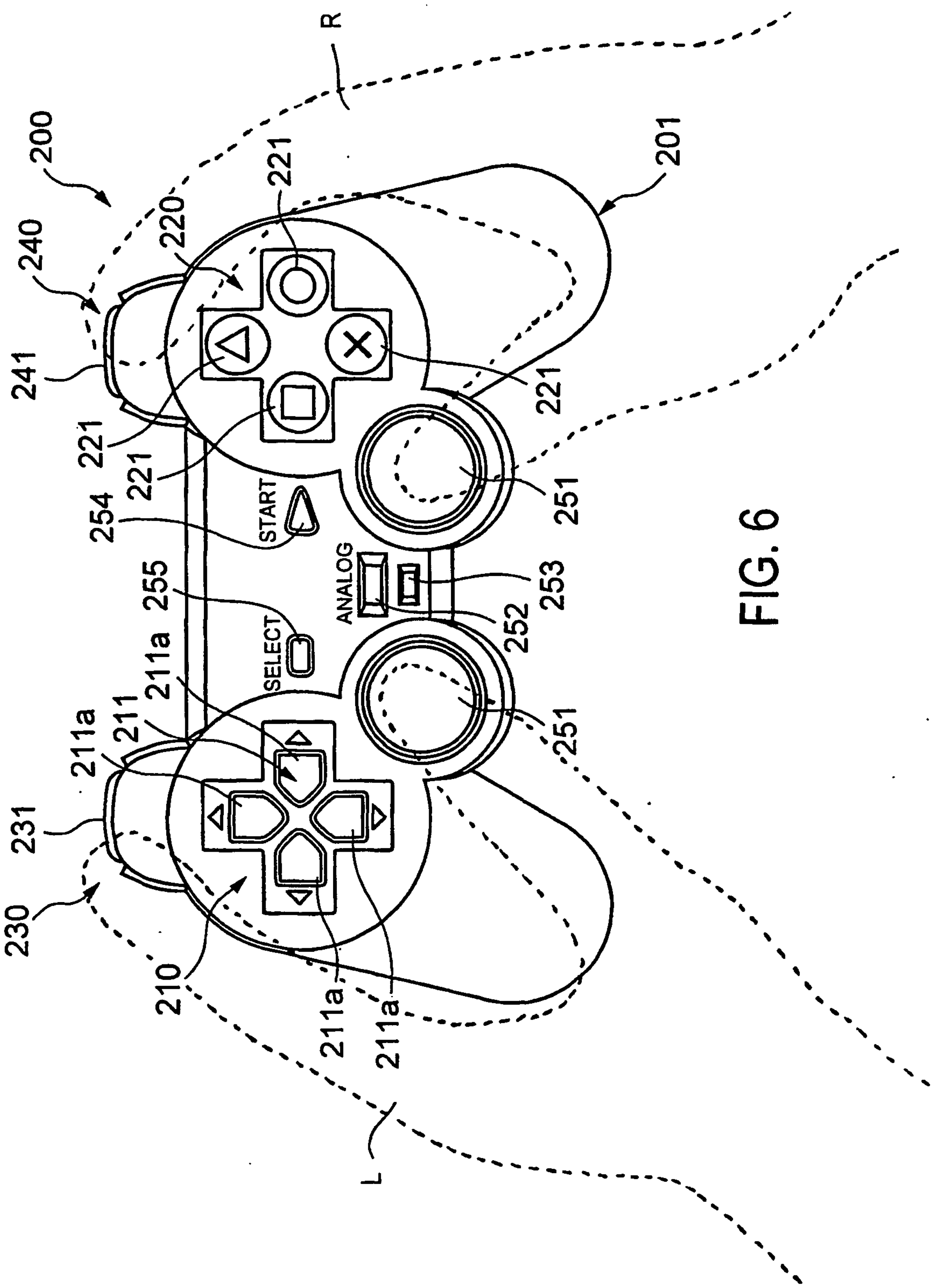
200
201
210
211
211a
220
221
230
231
240
241
251
252
253
254
255
START
SELECT
ANALOG
R
L

FIG. 6

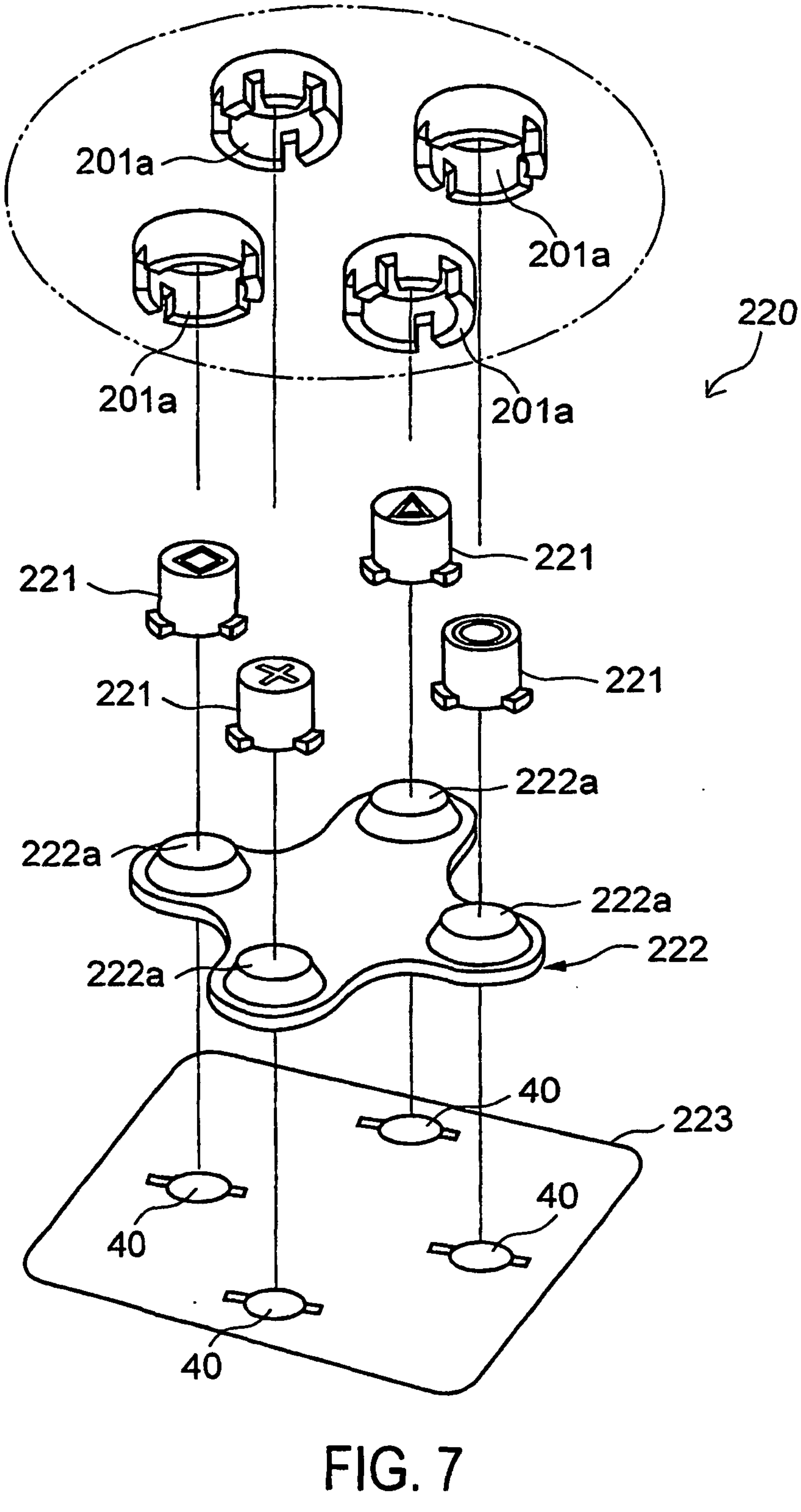
201a
201a
201a
201a
220
221
221
221
221
222a
222a
222a
222a
222
40
223
40
40
40

FIG. 7

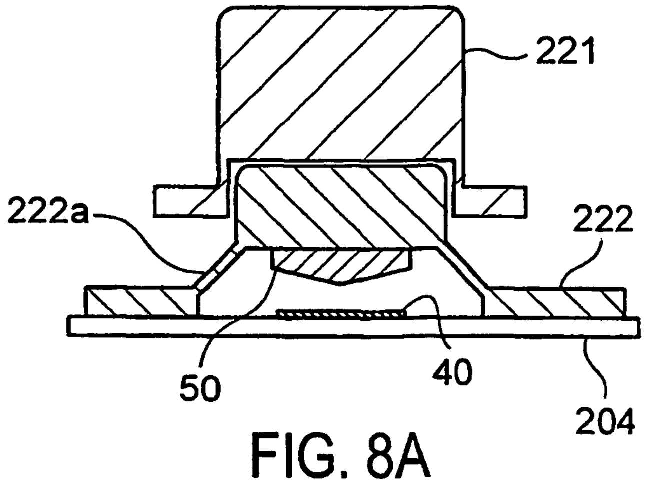


FIG. 8A

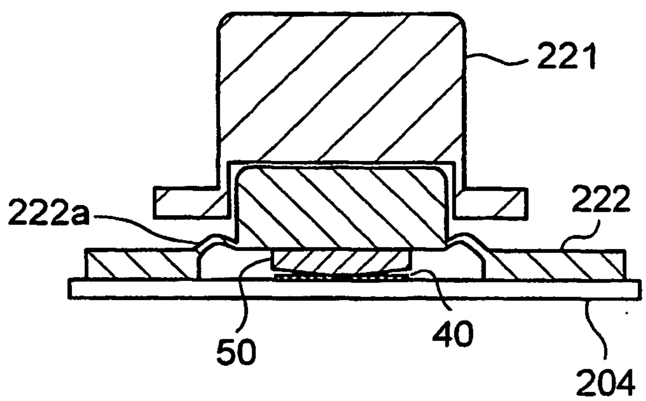


FIG. 8B

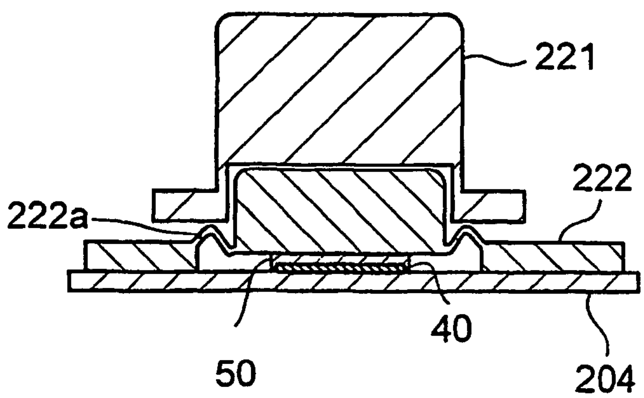


FIG. 8C

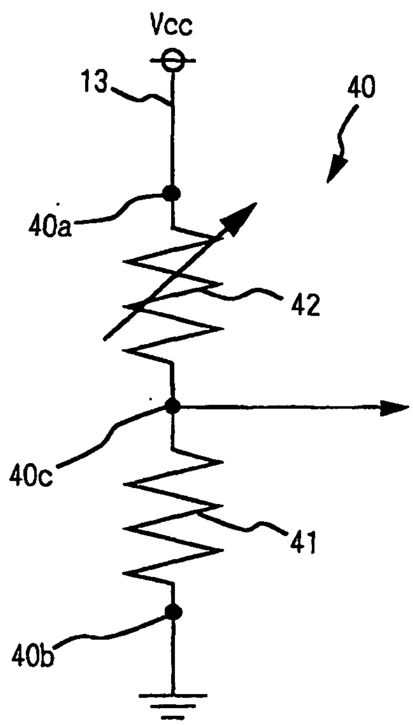


FIG. 9

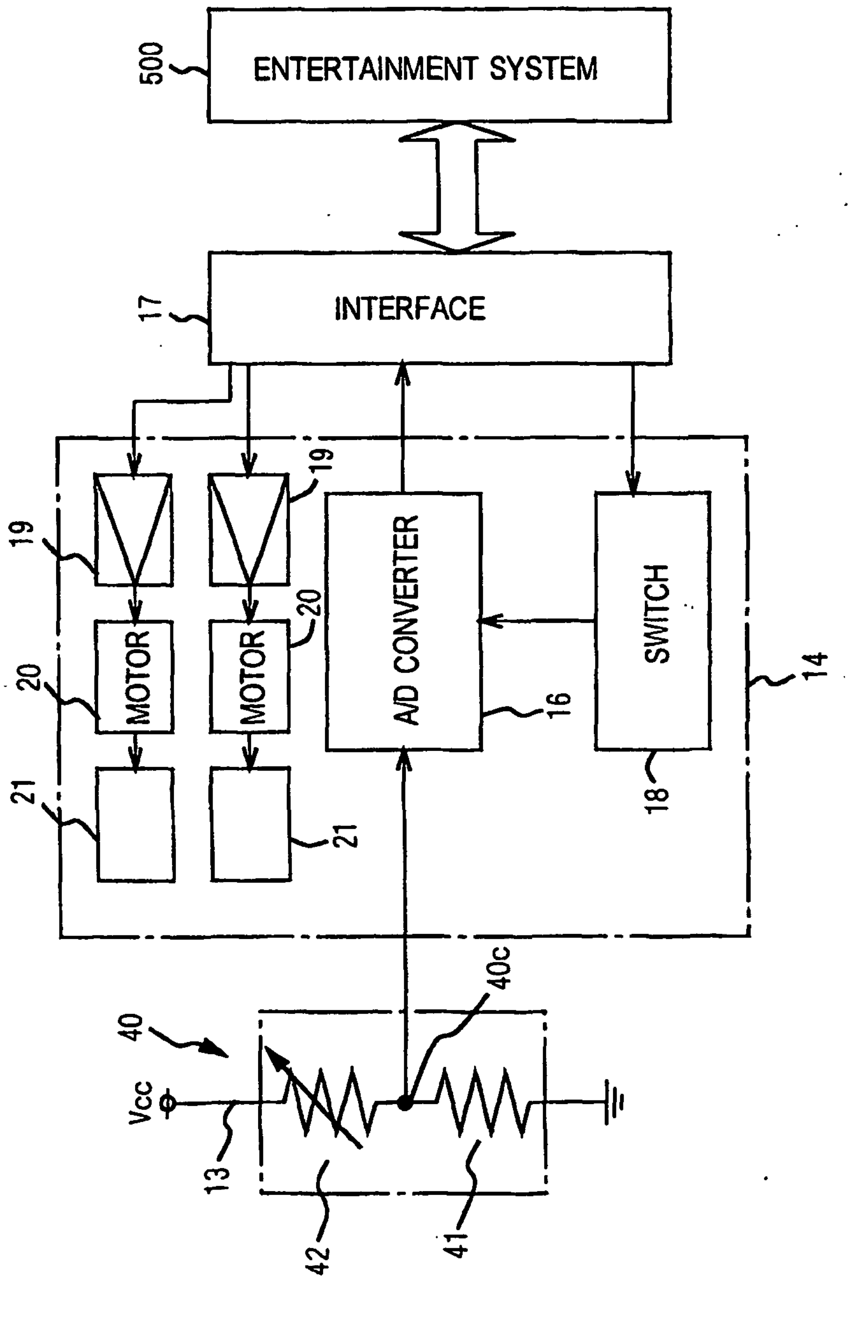
500
ENTERTAINMENT SYSTEM
17
INTERFACE
19
19
20
20
MOTOR
MOTOR
21
21
A/D CONVERTER
16
SWITCH
18
14
40
Vcc
13
40c
42
41

FIG. 10

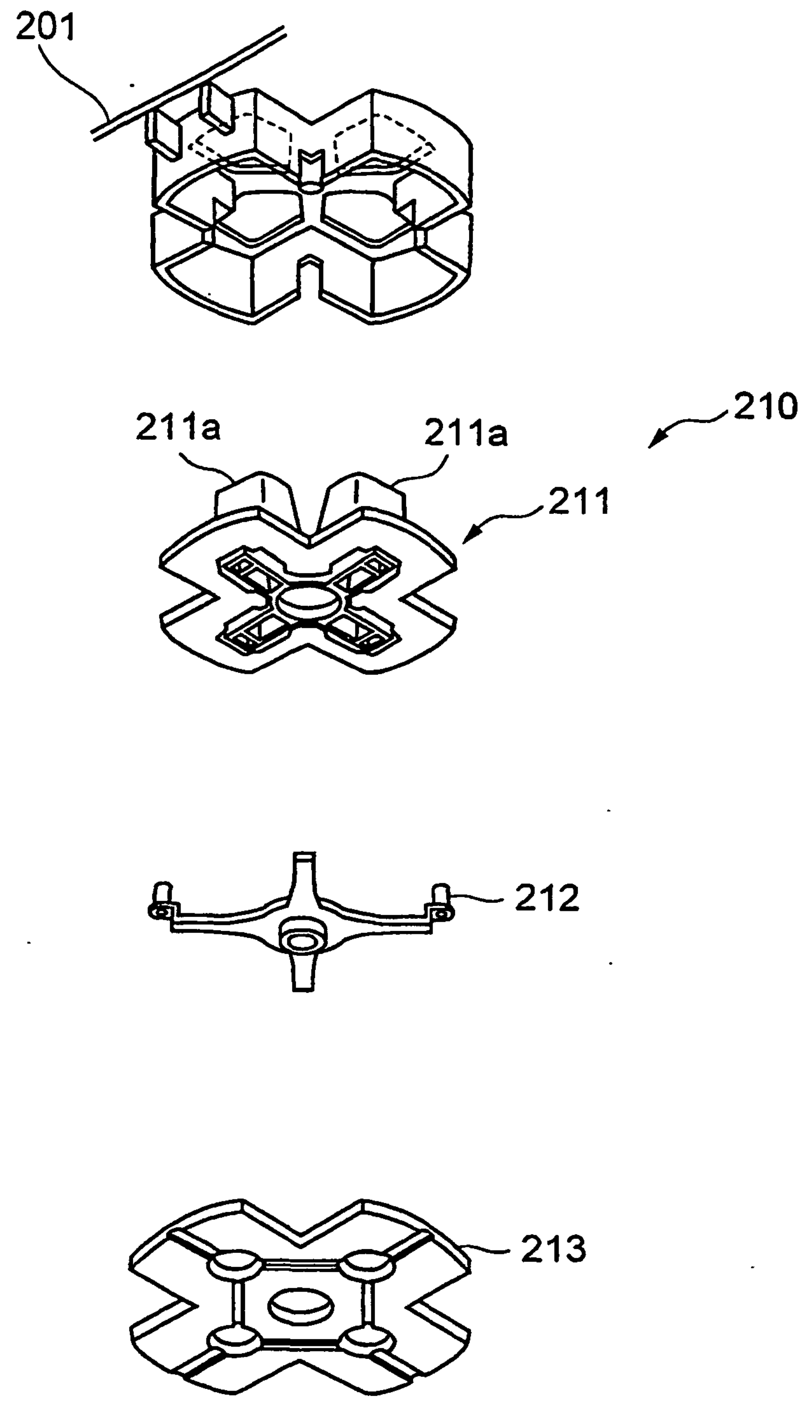


FIG. 11

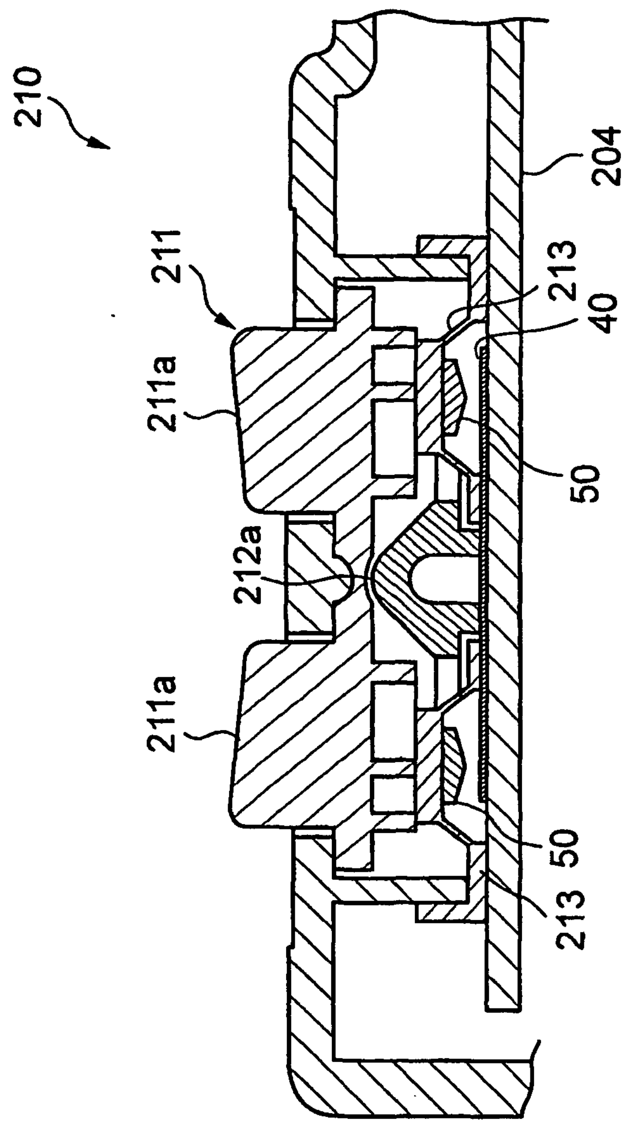


FIG. 12

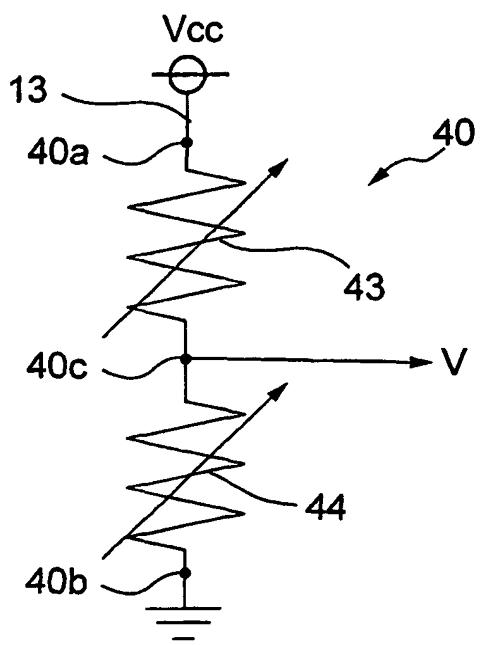


FIG. 13

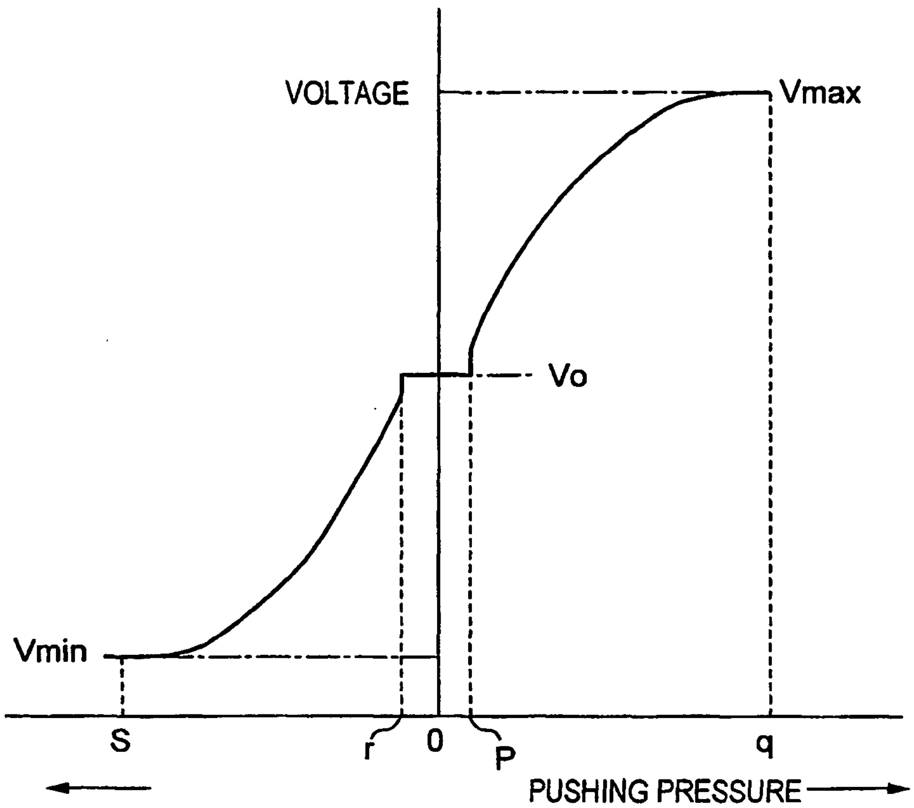


FIG. 14

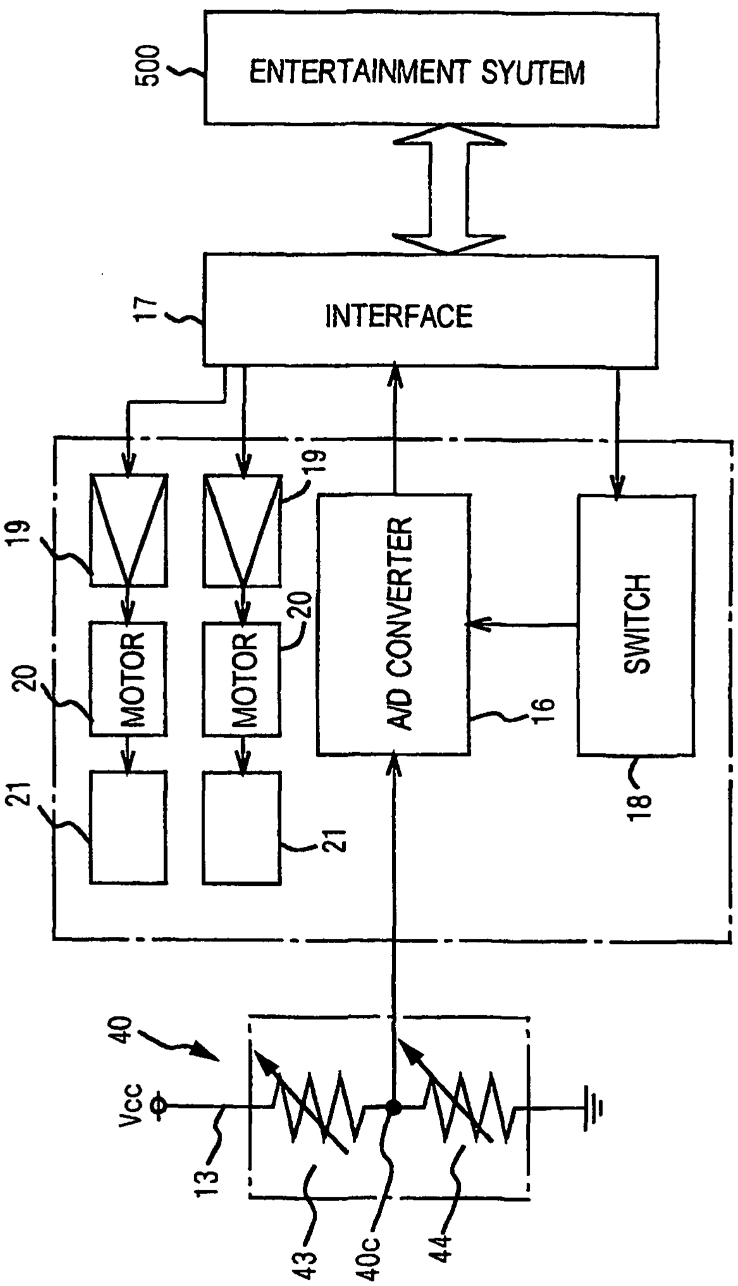

500
ENTERTAINMENT SYUTEM
17
INTERFACE
19
19
A/D CONVERTER
SWITCH
20
MOTOR
MOTOR
20
16
21
21
18
40
Vcc
13
43
40c
44


FIG. 15

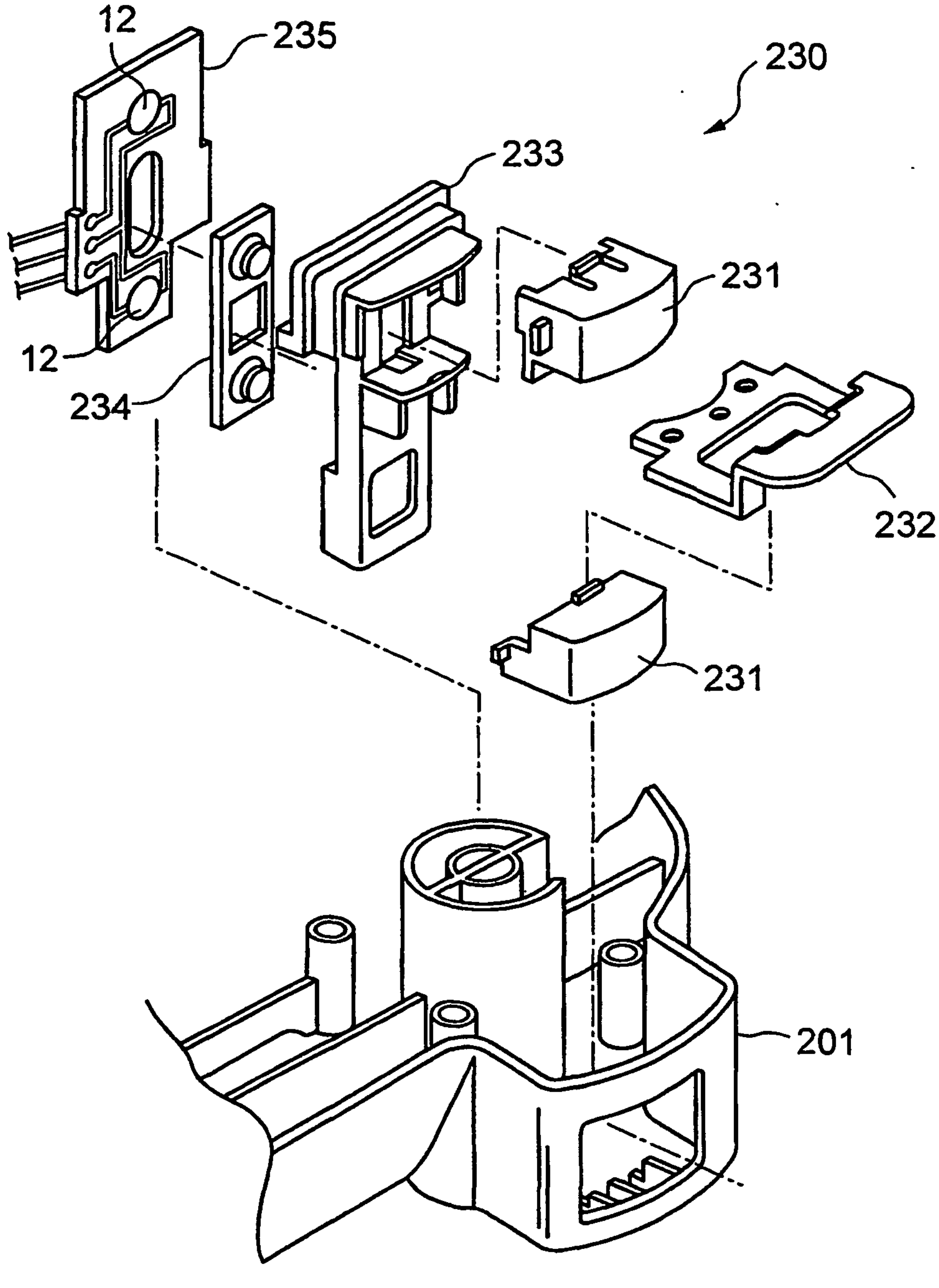


FIG. 16

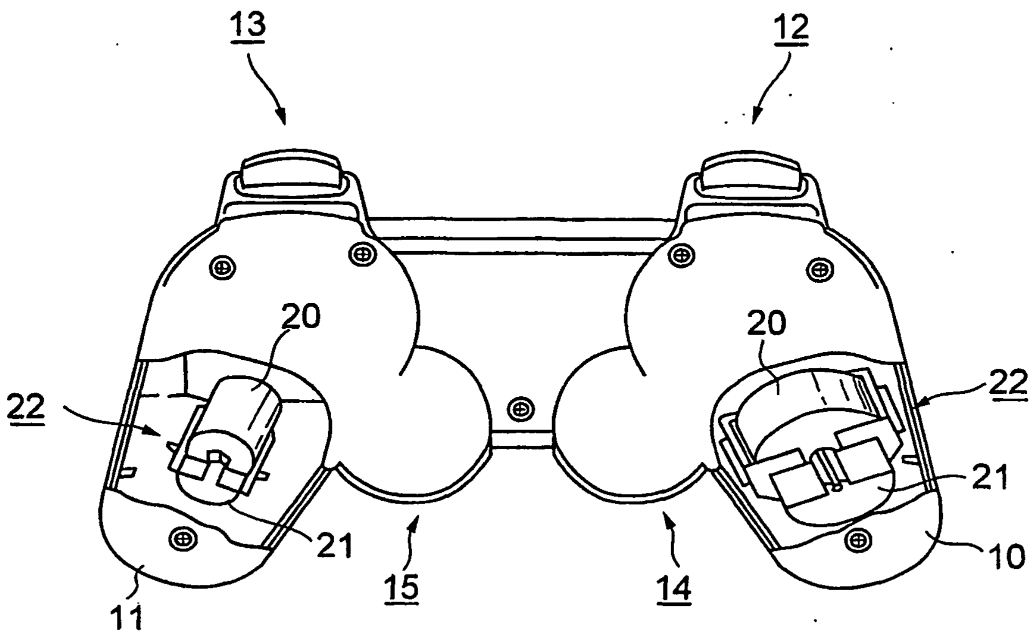


FIG. 17

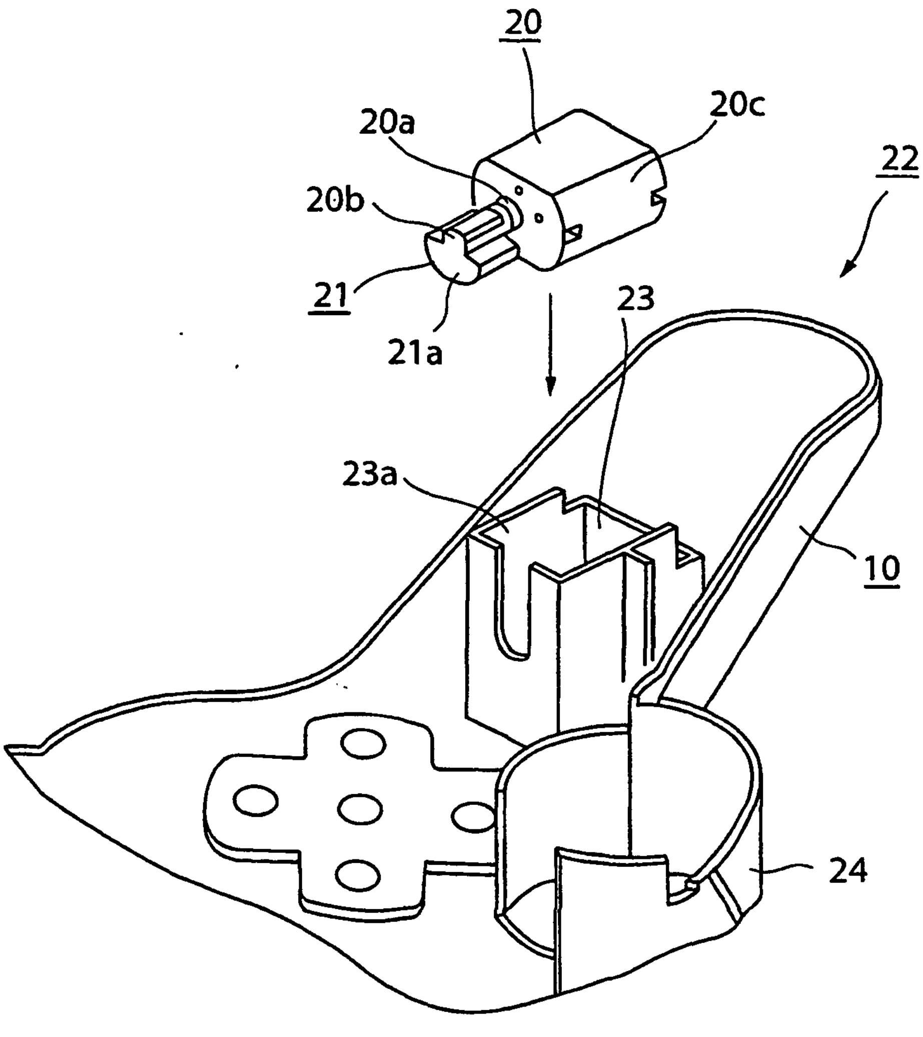


FIG. 18

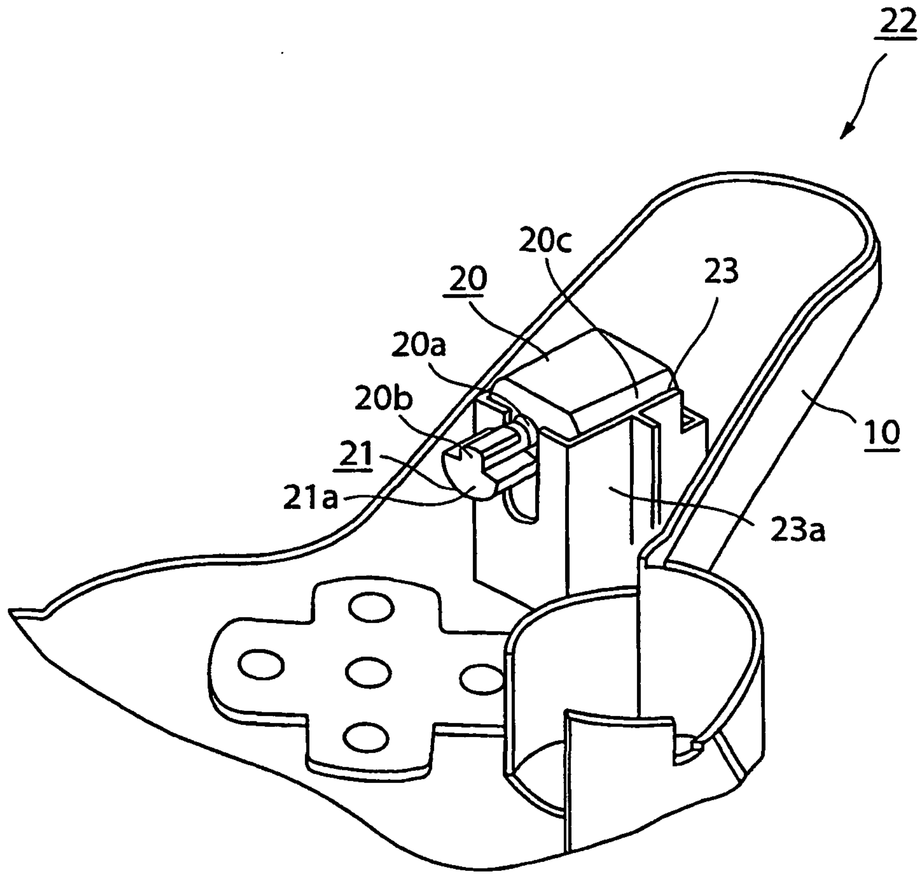


FIG. 19

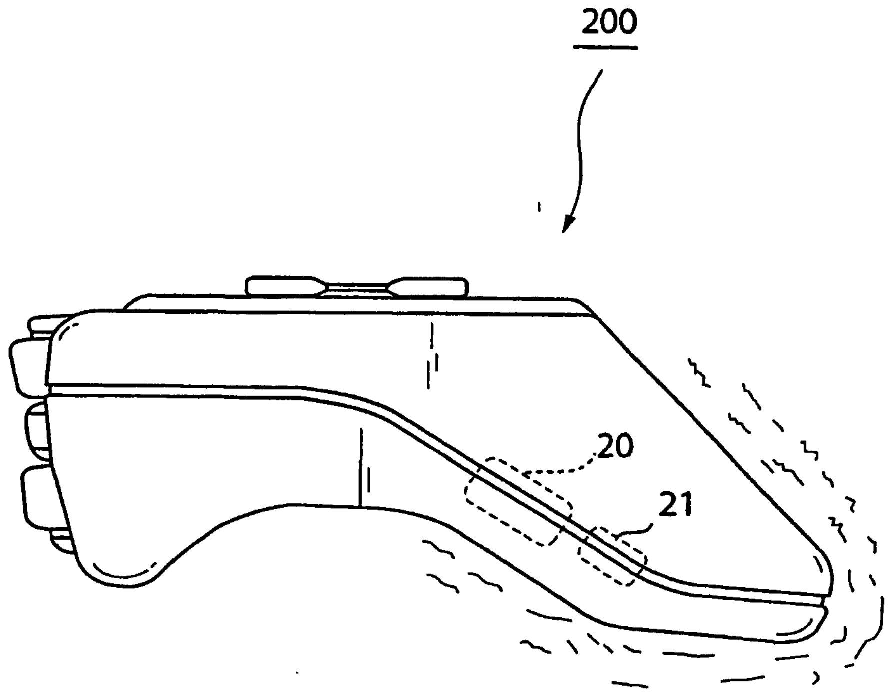


FIG. 20